# EUROPEAN PATENT SPECIFICATION

(11) **EP 2 384 041 B1**
(45) Date of publication and mention of the grant of the patent: **16.03.2016**
(21) Application number: 09835991.2
(22) Date of filing: 17.09.2009
(51) Int. Cl.: H04W 72/04

(54) **SYSTEM INFORMATION TRANSMISSION METHOD**
VERFAHREN ZUR ÜBERTRAGUNG VON SYSTEMINFORMATIONEN
PROCÉDÉ DE TRANSMISSION D'INFORMATIONS DE SYSTÈME

(30) Priority: 04.01.2009 CN 200910001749
(43) Date of publication of application: 02.11.2011
(73) Proprietor: ZTE Corporation, Shenzhen, Guangdong 518057 (CN)
(72) Inventor: GUAN, Yanfeng, Shenzhen Guangdong 518057 (CN); LIU, Xiangyu, Shenzhen Guangdong 518057 (CN); LIU, Ying, Shenzhen Guangdong 518057 (CN); LU, Zhaohua, Shenzhen Guangdong 51805 (CN); FANG, Huiying, Shenzhen Guangdong 518057 (CN)
(74) Representative: South, Nicholas Geoffrey
(86) International application number: PCT/CN2009/074017
(87) International publication number: WO 2010/075704

(56) References cited:
- WO-A1-2008/052625
- CN-A- 1 764 307
- CN-A- 1 960 358
- CN-A- 101 001 459
- CN-A- 101 123 805
- US-A1- 2008 057 972
- US-A1- 2008 080 476
- QUALCOMM EUROPE: "Removal of SEQUENCE OF SEQUENCE construction from ASN.1", 3GPP DRAFT; R2-086574, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081104, 4 November 2008 (2008-11-04), XP050321481, [retrieved on 2008-11-04]
- QUALCOMM EUROPE: "BCH Design for E-UTRA", 3GPP DRAFT; R1-061514, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20060502, 2 May 2006 (2006-05-02), XP050102363, [retrieved on 2006-05-02]
- NOKIA: "Broadcast Channel (BCH) structure and performance", 3GPP DRAFT; R1-062824, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20061004, 4 October 2006 (2006-10-04), XP050103309, [retrieved on 2006-10-04]

## Description

### Field of the Invention

The present invention relates to communication field, and more particularly to a system information transmission method.

### Background of the Invention

In a radio communication system, a base station refers to a device providing a terminal with services, and communicates with the terminal via uplink/downlink, wherein the downlink refers to a transmission link from a base station to a terminal while the uplink refers to a transmission link from a terminal to a base station. Multiple terminals can send data to a base station simultaneously via uplinks or receive data from a base station simultaneously via downlinks. In a radio communication system where a base station implements radio resource scheduling control, the scheduling and allocation of system radio resource are implemented by a base station. For example, a base station provides the downlink resource allocation information from the base station to terminals and the uplink resource allocation information from terminals to the base station.

In commercial radio communication systems, when scheduling the radio resource of air interface, a base station usually takes one radio frame as one scheduling period, and divides the radio resource into several radio resource units (e.g. one timeslot or one code word) for scheduling; and a base station provides terminals covered by the base station with data or multimedia services by scheduling radio resource units. For instance, in the 2nd generation radio communication system such as Global System for Mobile communication (GSM for short), a base station divides radio resources of each frequency point into Time Division Multiple Address (TDMA for short) radio frames with a period of 4.615 ms. Each radio frame includes eight timeslots. Each of timeslot can transfer data of one full-rate or two half-rate voice channels, or implement low-speed data services. In the 2.5 generation radio communication system such as General Packet Radio Service (GPRS for short), the data service rate is improved to more than 100kbps by introducing the packet switching based on fixed timeslots. In the 3rd generation radio communication system such Time-Division Synchronous Code Division Multiple Address (TD-SCDMA for short), a base station also divides radio resources of an air interface into radio frames with a period of 10ms; each 10ms includes 14 common timeslots and 6 special timeslots; the common timeslot is used for transmitting particular services and signaling; and a base station distinguishes users via different code words in each common timeslot.

It can be seen from the above descriptions that, the GSM and TD-SCDMA systems mainly adopt TDMA or Code Division Multiple Address (CDMA for short) technologies, and perform the resource mapping and resource allocation based on timeslots and code words; which has relatively simple process. However, in a system based on the Orthogonal Frequency Division Multiplexing (OFDM for short) and Orthogonal Frequency Division Multiple Address (OFDMA for short) technologies such as the radio communication systems of Long Term Evolution (LTE for short), Ultra Mobile Broadband (UMB for short) and IEEE 802.16m, although radio resources are divided into frames for management, each OFDM symbol includes multiple mutually orthogonal sub-carriers, and the technologies such as Fractional Frequency Reuse (FFR for short) are adopted to reduce the interference and improve the coverage. Secondly, since the channel environment of radio communication changes frequently, in order to achieve the frequency diversity gain and the frequency selective scheduling gain, a base station divides the available physical sub-carriers into physical resource units and maps the physical resource units into Contiguous Resource Unit (CRU for short) and Distributed Resource Unit (DRU for short) to improve the transmission performance, wherein the directly-mapped CRU is referred to as Contiguous Logical Resource Unit (CLRU for short), which means the sub-carriers thereof are contiguous. After the subcarrier permutation or tile permutation, the DRU becomes Distributed Logical Resource Unit (DLRU for short), which means that the sub-carriers thereof are not contiguous or not all contiguous. In addition, since the frequency resource is scarce, a base station needs to support multi-carriers so as to utilize the distributed frequency resources, which causes the division of radio resource more complex, and finally causes it is difficult that a base station transmits the system information and a terminal analyzes the resource allocation information of base station, such that the process for determining the physical resource location through which the terminal receives and sends data becomes complex.

It can be seen that, the system information management and resource allocation method of the radio system based on the OFDM/OFDMA are different from those based on the TDMA and CDMA. Therefore, there is no effective solution provided at present for solving the problems that a terminal can not efficiently acquire the system information and the resource mapping condition performed by a base station.

US 2008/080476 A1 discloses a method and an apparatus for transmitting a downlink Synchronization CHannel (SCH) in an Orthogonal Frequency Division Multiplexing (OFDM)-based cellular wireless communication system supporting a scalable bandwidth. Initial cell search and neighbor cell search are seamlessly performed. The broadcast channel BCH is used for transmitting system information of a cell that a UE accesses, by which the UE can obtain system information necessary for the reception of data channels and other control information, such as a cell ID of each cell, a system bandwidth and channel setup information.

QUALCOMM EUROPE: "Removal of SEQUENCE OF SEQUENCE construction from ASN. 1", 3GPP DRAFT; R2-086574, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE , no. Prague, Czech Republic ; 4 November 2008 (XP050102363) discloses a means for removal of a problematic construction from the RRC ASN.1, specifically relating to the 'SEQUENCE OF SEQUENCE' ASN.1 construction. The document provides details of system information and its system information blocks, wherein System Information Block Type 2 contains radio resource configuration information that is common for al UEs.

### Summary of the Invention

The present invention is provided to solve the problem that a terminal in an OFDM/OFDMA based radio system can not efficiently acquire the system information and the resource mapping condition performed by a base station. In view of this, the main objective of the present invention is to provide a system information transmission solution in a communication system to solve the above problem in the related art.

To achieve the above objectives, according to one aspect of the present invention, a system information transmission method is provided.

A system information transmission method according to the present invention includes: configuring by a base station a system information including resource mapping information; and. transmitting by the base station the resource mapping information through a broadcast control channel.

Preferably, the system information further comprises at least one of the following: uplink/downlink bandwidth information, multi-carrier information, system compatibility information, control channel information and multicast broadcast information.

Preferably, the bit number necessary for representing fractional or all system information is determined according to system bandwidth.

Preferably, the uplink/downlink bandwidth information comprises at least one of the following: the number of uplink sub-frames and downlink sub-frames or the proportion of uplink sub-frames and downlink sub-frames in the mode of TDD; whether individual carriers belong to the uplink carrier or the downlink carrier in the mode of FDD; a bandwidth of downlink carrier and/or a bandwidth of uplink carrier in the mode of FDD; and the proportion of downlink carrier bandwidth to uplink carrier bandwidth in the mode of FDD.

Preferably, the multi-carrier information comprises at least one of the following: indication information of whether to support a multi-carrier operation, duplex mode of, frequency point of each of fractional configuration carriers, bandwidth of each of fractional configuration carriers, and usage information of protection sub-carriers under the multi-carrier operation.

Preferably, the system compatibility information comprises at least one of the following: indication information of whether to support a compatibility system, resource location information of a compatibility system in the downlink, and resource location information of a compatibility system in the uplink, wherein the resource location information of a compatibility system in the downlink comprise at least one of the following: the number of sub-frames occupied by a compatibility system and locations of sub-frames occupied by a compatibility system; the resource location information of a compatibility system in the uplink comprises at least one of the following: the total number of sub-frames occupied by a compatible system, the number of sub-frames occupied under the TDM mode, locations of sub-frames occupied under the TDM mode, locations of sub-frames occupied under the FDM mode and a resource unit number or a proportion of sub-frames occupied under the FDM mode.

Preferably, the control channel information comprises at least one of the following: the number of streams of a secondary broadcast control channel when using MIMO for transmission, a code rate of a secondary broadcast control channel, the number n of sub-frames in the interval between unicast service control channels and the location information of resource occupied by the uplink control channel, wherein the location information of resource occupied by the uplink control channel comprising: Ranging channel location information, fast feedback channel location information, HARQ feedback channel location information, bandwidth request channel location information and Sounding channel location information.

Preferably, the multicast broadcast information comprises multicast broadcast location information and/or cyclic prefix information used in the multicast broadcast, wherein the location information is indicated by one or the combination of the number of sub-frames, a sub-frame label, a frequency partition label, the number of resource units, a resource unit label and a resource unit area identifier; and the cyclic prefix information indicates a cyclic prefix length used in the multicast broadcast area through binary bit index.

Preferably, the method further includes: transmitting in the broadcast control channel by the base station at least one of the following: the uplink/downlink bandwidth information, the multi-carrier information, the system compatibility information, the control channel information and the multicast broadcast information.

Preferably, the resource mapping information comprises one or the combination of the following: the total number of physical resource units, a sub-band size, a mini-band size, the number of frequency partitions, size of each frequency partition, fractional frequency reuse factors corresponding to each frequency partition, the number of sub-bands in each frequency partition, the number of mini-bands in each frequency partition, the number of distributed resource units in each frequency partition and the number of contiguous resource units in each frequency partition.

Preferably, the sub-band is composed of multiple contiguous physical resource units; and the mini-band is composed of one or more contiguous physical resource units.

Preferably, the physical resource units included in the sub-band and/or the mini-band are fixed, or determined according to the system bandwidth and/or the channel quality feedback.

Preferably, the number of binary bits representing the frequency partition is fixed, or determined according to the system bandwidth.

Preferably, the fractional frequency reuse factor corresponding to the frequency partition is represented by one of the following manners: representing fractional frequency reuse factor corresponding to each frequency partitions by using 1∼3 bits respectively; determining fractional frequency reuse factor corresponding to each frequency partition according to the number of frequency partitions; and determining the fractional frequency reuse factors thereof independently for fractional frequency partitions of all frequency partitions; and adopting the same fractional frequency reuse factor for the remaining frequency partitions of all frequency partitions.

Preferably, the number of sub-bands in each frequency partition and/or the number of mini-bands in each frequency partition are represented by binary bits.

Preferably, the binary bits comprise 3∼9 bits; or, the bit number of the binary bits is determined according to the system bandwidth.

Preferably, the size of the frequency partition is represented by one of the following manner: the size of the frequency partition is represented by the number of resource units included in the frequency partition, wherein the resource unit is a logical resource unit or a physical resource unit; the size of the frequency partition is represented by a frequency partition configuration identifier; and the size of the frequency partition is represented by the number of sub-bands and/or mini-bands included in the frequency partition.

Preferably, the number of distributed resource units in the frequency partition and/or the number of contiguous resource units in the frequency partition are represented by one of the combination of the following manners: Manner 1: the number of distributed resource units in the frequency partition is represented by using multiple binary bits to indicate the number of sub-bands and/or mini-bands and/or resource units used for distributed resource units in frequency partitions; and the number of contiguous resource units in frequency partition is determined by the size of the frequency partition and the number of distributed resource units in the frequency partition; Manner 2: the number of contiguous resource units in the frequency partition is represented by using multiple binary bits to indicate the number of sub-bands and/or mini-bands and/or resource units used for contiguous resource units in the frequency partition; and the number of distributed resource units in the frequency partition is determined by the size of the frequency partition and the number of contiguous resource units in the frequency partition; and Manner 3: the configuration mode of the distributed resource unit and the contiguous resource unit in the frequency partition is indicated by multiple binary bits, wherein the resource unit is a logical resource unit or a physical resource unit.

Preferably, the multiple binary bits comprise 3∼8 bits; alternatively, the bit number of by the multiple binary bits is determined according to the system bandwidth.

Preferably, the fractional or all resource mapping information adopts default settings

Preferably, the step of transmitting by the base station the resource mapping information through the broadcast control channel comprises: transmitting, via the broadcast control channel, at least one of the following: the number of the frequency partitions, the size of the each frequency partition, the fractional frequency reuse factors of the each frequency partition, the number of sub-bands in the each frequency partition, the number of mini-bands in the each frequency partitions, the number of distributed resource units in the each frequency partition and the number of contiguous resource units in the each frequency partition.

By means of the present invention, by configuring and transmitting the system information and resource allocation information, it is possible for a terminal to acquire the resource configuring, mapping and/or allocating condition performed by a base station, so as to improve the scheduling efficiency of radio resource and reduce the system overhead.

Other features and advantages of the present invention will be set forth in part in the description which follows and, in part, will be obvious from the description, or may be understood by practice of the invention. The objectives and other advantages of the present invention may be implemented and achieved by the structures indicated particularly in the written description, claims and accompanying drawings.

### Brief description of the drawings

The accompanying drawings are used for providing further understanding of the present invention and constitute a part of the application, which, together with the embodiments of the present invention, is used for further explaining the present invention and not for limiting the protection scope thereof, in which:
Fig. 1 is a schematic diagram illustrating a frame structure of radio communication system in accordance with the related art;
Fig. 2 is a schematic diagram illustrating the resource structure of radio communication system in accordance with the related art;
Fig. 3 is a schematic diagram illustrating the resource mapping process of 5 MHz radio communication system in accordance with an embodiment of the present invention; and
Fig. 4 is a schematic diagram illustrating the resource mapping process of 10 MHz radio communication system in accordance with an embodiment of the present invention.

### Detailed description of the invention

It should be noted that, in the case that there is no conflict, the features described by embodiments and embodiments of the present invention may be combined with each other. A detailed description of the present invention is provided hereinafter with reference to the attached drawings and embodiments.

### Function Summary

Taking into account the problem in the related art that in a radio system based on OFDM/OFDMA a terminal can not acquire the system information and the resource mapping condition performed by a base station, an embodiment of the present invention provides a system information transmission solution in a communication system, which has the processing principle as follows: a base station configures the system information including the resource mapping information and transmits the resource mapping information via the broadcast control information.

It should be noted that, the system information configured by the base station includes the system information configured and determined by the base station itself and/or the system information which is received and then forwarded by the base station. Configuring the system information by the base station includes: the process of acquiring and/or transmitting system parameter by the base station.

To guarantee the normal communication between a base station and a terminal, the base station must map physical radio resources into logical radio resources, for example, mapping physical sub-carriers into logical resource units; and the base station implements the radio resource scheduling by scheduling the logical resource units. For an OFDM/OFDMA based radio communication system, the mapping of radio resource is mainly performed according to the frame structure and the resource structure of radio communication system wherein the frame structure depicts the control structure of radio resource in the time domain; and the resource structure depicts the control structure of radio resource in the frequency domain.

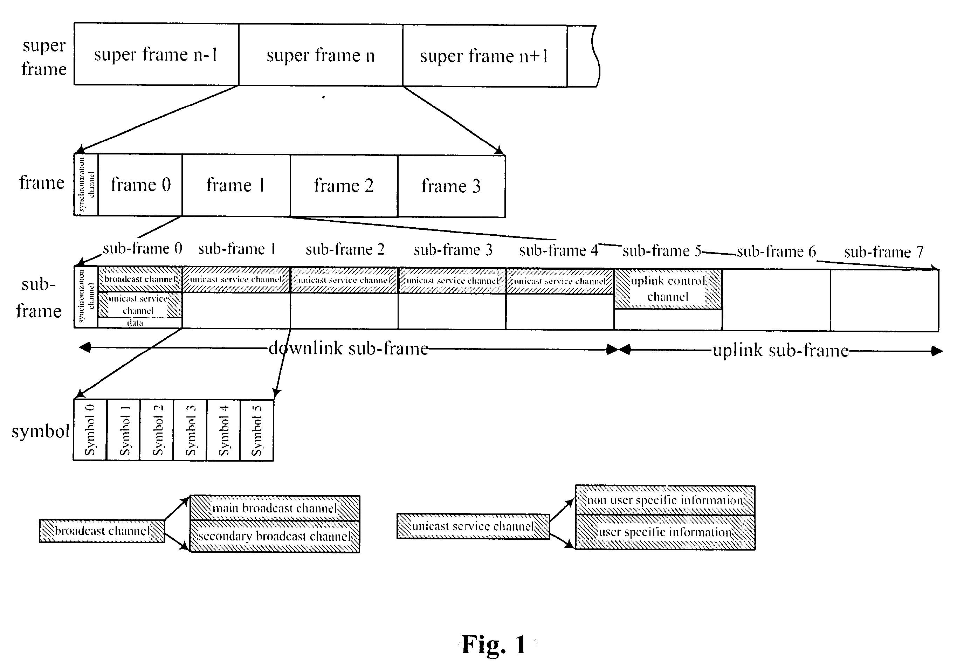

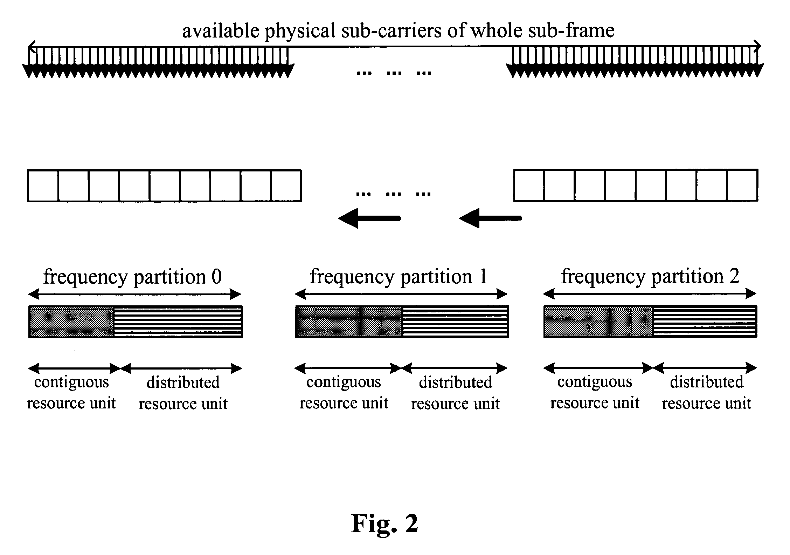

The frame structure divides the radio resource in the time domain into the different levels of units such as super frame, frame, sub-frame and symbol for the scheduling. The scheduling control is implemented by setting the different control channels such as Broadcast Control Channel (BCCH for short), Unicast Service Control Channel (USCCH for short). Hereinafter, the control channel can be referred to as broadcast channel and unicast control channel. For example, Fig. 1 is a schematic diagram illustrating a frame structure of radio communication system in accordance with the related art. As shown in Fig. 1, the radio resource is divided into super frames in the time domain. Each super frame includes four frames wherein each frame includes eight sub-frames which is composed of six basic OFDM symbols. A practical system determines the number of OFDM symbols included in each level of units in the frame structure according to factors such as the terminal speed, the system bandwidth, the Cyclic Prefix (CP for short) length and the uplink/downlink conversion interval to be supported, and sets a broadcast control channel in a first downlink sub-frame of super frame for transmitting the system information. In addition, as shown in Fig. 1, since the broadcast control channel is located at the first sub-frame of the header of super frame, the broadcast control channel is also referred to as SuperFrame Header (SFH for short). The broadcast control channel includes a main broadcast control channel and/or secondary broadcast control channel, therefore equivalently, a super frame header includes a main super frame header and/or a secondary super frame header. Since a unicast service control channel is set for transmitting the resource scheduling information mainly, therefore the unicast service control channel is also referred to as MAP channel including Non-User-Specific (NUS for short) information and/or User-Specific (US for short) information. In the frequency domain, the resource structure divides the available frequency band into multiple frequency partitions according to the factors such as coverage range, coverage ratio, system capacity and transmission rate to be supported, so that the frequency resource in frequency partition is further mapped into contiguous resource unit area and/or distributed resource unit area. Fig. 2 is a schematic diagram illustrating the resource structure of radio communication system in accordance with the related art. As shown in Fig. 2, the available physical sub-carriers of sub-frame are divided into physical resource units. After the physical resource units are permuted, they are allocated to three frequency partitions, each of which can be divided into contiguous resource units and distributed resource units, for implementing the flexibility of scheduling. The terminal needs to inversely map the logic radio resource into the physical radio resource according to the resource configuration of base station, so as to transmit and receive data at the right location.

Therefore, in an OFDM/OFDMA based radio system, to guarantee that a terminal performs the inverse mapping so as to transmit and receive data at the right location, it is necessary to study the problem: which system information a base station transmits and how to transmit such system information and how the terminal determines the practical physical resource location according to the resource allocation message and the system information of base station. To solve the above problem, on the one hand, it is necessary to consider the speed and complexity that a base station analyzes the physical location of a resource; and on the other hand, it is also necessary to consider the signaling overhead required by a terminal analyzing the physical location of a resource.

According to an embodiment of the present invention, a system information transmission method in a communication system is provided to guarantee that the resource configuration and the mapping condition are notified to a terminal, so that the terminal can parse the radio resource information correctly. In an embodiment of the present invention, the system information includes the resource mapping information representing the resource configuration and mapping condition.

### Resource Mapping Information

Particularly, the resource mapping information in the process of a base station configuring the resource mapping is transmitted via the broadcast control channel. It should be noted that the broadcast control channel includes a main broad cast channel and/or secondary broadcast control channels. Preferably, in an embodiment of the present invention, the above resource mapping information is transmitted via the main broadcast control channel and/or secondary broadcast control channels, for example, the resource mapping information is carried or provided in the system information for transmission. It should be noted that fractional (partial) or all resource mapping information can adopt default settings.

Preferably, in an embodiment of the present invention, the resource mapping information can include, but is not limited to, one of the following or the combination thereof: the total number of physical resource units, the number of frequency partition (FP), the size of the sub-band, the size of the mini-band, the size of individual frequency partitions, fractional frequency reuse factors corresponding to individual frequency partitions, the number of sub-bands in each frequency partitions, the number of mini-bands in each frequency partition, the number of distributed resource units in each frequency partition and the number of contiguous resource units in each frequency partition.

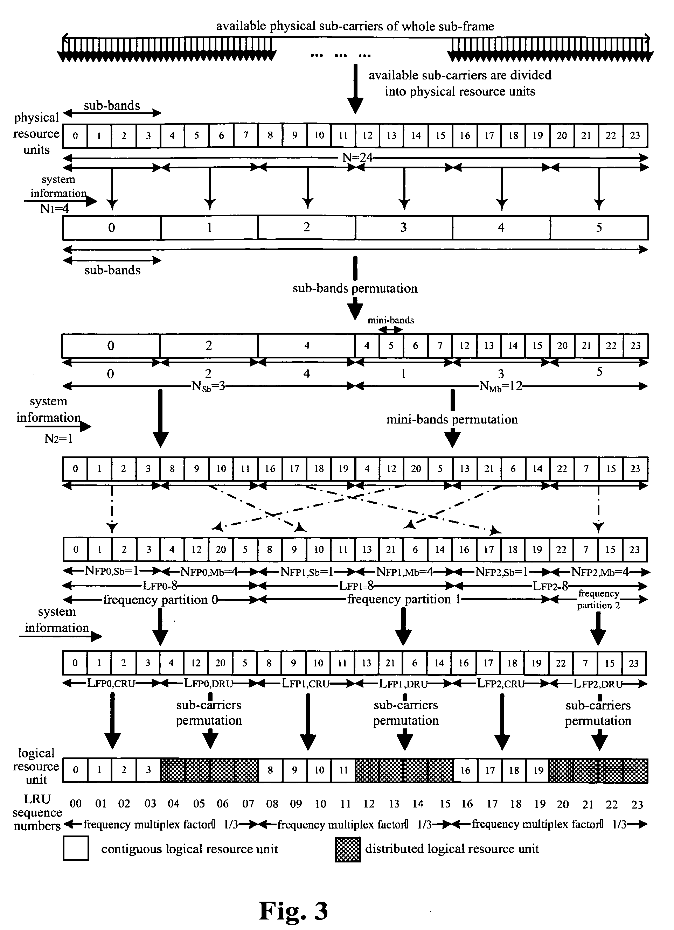

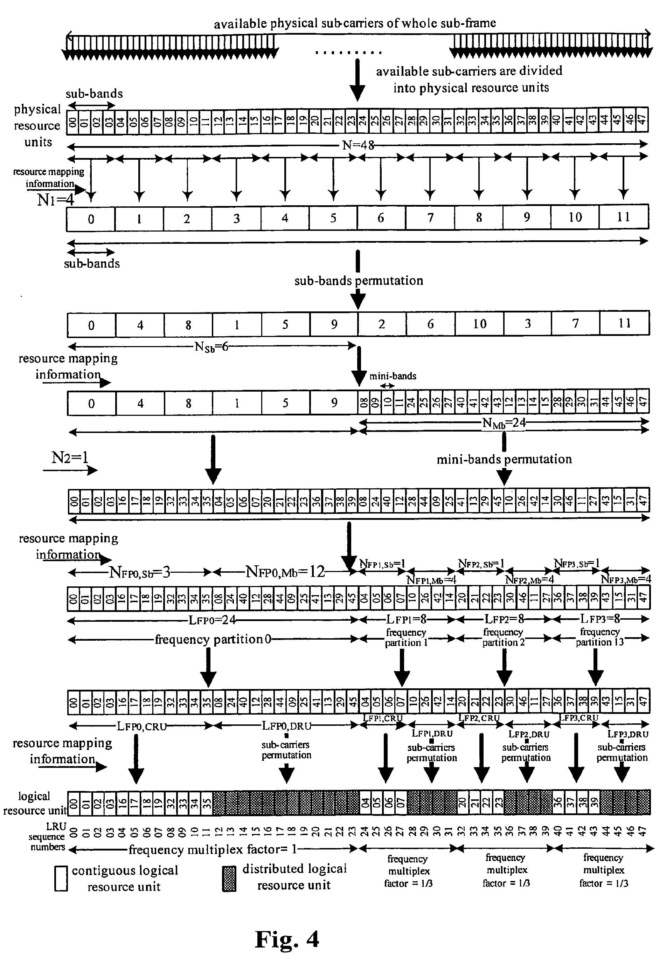

In the above information, the sub-band is composed of multiple contiguous physical resource units; the mini-band is composed of one or more contiguous physical resource units; moreover, the physical resource units included in the sub-band and/or mini-band are predetermined or determined according to the bandwidth and/or the channel quality feedback granularity or mechanism. In an embodiment of the present invention, a sub-band includes N1 physical resource units while a mini-band includes N2 physical resource units. Particularly, there is a corresponding relation between the system bandwidth and one of the following or the combination thereof: the number of points of Fast Fourier Transform (FFT), the location of broadcast control channel, the number of physical resource units, N1 and N2. For example, Fig. 3 is a schematic diagram illustrating the resource mapping process of 5 MHz radio communication system in accordance with an embodiment of the present invention. As shown in Fig. 3, the system bandwidth is 5 MHz, the number of FFT points is 512, and the total number of physical resource units N=24, N1=4, N2=1. Fig. 4 is a schematic diagram illustrating the resource mapping process of 10 MHz radio communication system in accordance with an embodiment of the present invention. As shown in Fig. 4, the system bandwidth is 10 MHz, the number of FFT points is 1024, and the total number of physical resource units N=48, N1=4, N2=1. For a 20MHz radio communication system, the system bandwidth is 20 MHz, the number of FFT points is 2048, and the total number of physical resource units N=96, N1=8, N2=2.

In addition, in terms of transmitting the above each information, at least one of the following information is transmitted via a broadcast channel: the number of frequency partitions, the size of individual frequency partitions, fractional frequency reuse factors of individual frequency partitions, the number of sub-bands in each frequency partition, the number of mini-bands in each frequency partition, the number of distributed resource units in each frequency partition and the number of contiguous resource units in each frequency partition.

### Frequency Partition Number

In an embodiment of the present invention, the number of frequency partitions can be indicated by the manner of binary bit index. For example, it is represented by a binary value of 2∼3 bits, and the practical number of frequency partitions is obtained by adding one to said value, e.g. in the case of 3 bits, 000 represents there is only one frequency partition while 110 represents there are seven frequency partitions. Taking the condition as shown in Fig. 3-Fig. 4 as an example, since there are three frequency partitions in Fig. 3, the number of frequency partitions can be represented as 010, while since there are four frequency partitions in Fig. 4, the number of frequency partitions can be represented as 011. Certainly, there is only a representing example given in the above description, and other modes can also be used for representing the number of frequency partitions. For example, several binary bits are used for representing the number of frequency partitions, 00 representing one frequency partition, 01 representing three frequency partitions, 10 representing four frequency partitions, and 11 representing seven frequency partitions.

### Frequency Partition Size

The size of the frequency partition can be represented by one of sub-band, mini-band and resource unit or the combination thereof, wherein the resource unit is a logical resource unit or a physical resource unit. Preferably, the size of the frequency partition is represented by use of sub-band and/or mini-band.

There are four manners given as examples in an embodiment of the present invention, however the present invention is not limited thereto.

Manner 1: the size of the frequency partition are represented by the number of sub-bands, mini-bands or resource units included in the frequency partition, wherein the resource unit is a logical resource unit or a physical resource unit.

For example, the number of PRU included by the frequency partition of the base station broadcast system information is 24, i.e. N=24, for a 5 MHz system wherein each frequency partition is represented by 4 or 5 binary bits. For example, as shown in Fig. 3, for the condition that there are three frequency partitions which are frequency partition 0∼2, supposing that there are L_{FP0}=8 PRUs in the frequency partition 0, there are L_{FP1}=8 PRUs in the frequency partition 1, and there are L_{FP2}=8 PRUs in the frequency partition 2, the system information is represented as 00111,00111 and 00111.

Manner 2: the size of the frequency partition is represented by frequency partition configuration identifier, in which each identifier represents the specific number of sub-bands, mini-bands or resource units included in each frequency partition.

For example, there are 48 PRUs, i.e. N=48, in a 10MHz, system, wherein when the resource is mapped into 3 frequency partitions which are frequency partition 0-2, 00 can be used for representing 16:16:16, 01 can be used for representing 24:12:12, 10 can be used for representing 12:24:12, and 11 can be used for representing 12:12:24. For example, based on the above description, supposing that there are L_{FP0}=16 PRUs in the frequency partition 0, there are L_{FP1}=16 PRUs in the frequency partition 1, and there are L_{FP2}=16 PRUs in the frequency partition 2, the system information can be represented as 00. As shown in Fig. 4, however, 4 frequency partitions are mapped into wherein the size of individual frequency partitions are respectively 24, 8, 8 and 8, which can be represented by use of frequency partition configuration identifier 011 (or other equivalent identifier). It can be seen that, in the method, the configuration identifier itself is not directly equal to the practical size of the frequency partition, but indicates a corresponding relation between the practical size and the configuration identifier, and the similar method is not further described again.

Manner 3: the size of the frequency partition is represented by use of the offset of each frequency partition relative to the first frequency partition. For example, in the above Manner 2, 00 represents 16:16:16. In the case of the representing method of Manner 3, it can be represented as 00000, 01111, 11111, wherein the offset of frequency partition 0 is relative to itself, such that the offset information thereof is 00000, which can be omitted; while the offset of frequency partition 1 relative to frequency partition 0 is 01111, and the offset of frequency partition 2 relative to frequency partition 0 is 11111.

Manner 4: the size of the frequency partition is represented by use of the number of sub-bands and/or mini-bands included in a frequency partition.

For example, as shown in Fig. 3, the size of the frequency partition is represented by the mini-band for the 5MHz bandwidth, using 5 bits, and the number of the included sub-bands is represented by 3 bits. Therefore, frequency partition 0 includes one sub-band and four mini-bands; and the size of frequency partition 0 is 8 mini-bands, which is represented as 01000 wherein the number of the included sub-bands can be represented as 001 by use of 3 bits. Frequency partition 1 includes one sub-band and four mini-bands; and the size of frequency partition 1 is 8 mini-bands, which is represented as 01000 wherein the number of the included sub-band can be represented as 001 by use of 3 bits. Frequency partition 2 includes one sub-band and four mini-bands; and the size of frequency partition 2 is 8 mini-bands, which is represented as 01000 wherein the number of the included sub-band can be represented as 001 by use of 3 bits. It should be noted that the bit number representing the sub-band and mini-band should be determined according the system bandwidth to reduce the overhead.

### Fractional Reuse Factor Corresponding to Frequency Partition

There are many methods for representing fractional frequency reuse factors corresponding to frequency partitions, and several representing manners are hereinafter given for example.
Manner 1:1∼3 bit(s) can be used respectively for representing fractional frequency reuse factors of individual frequency partitions; for example, 00 represents that the fractional frequency reuse factor is 1; 01 represents that the fractional frequency reuse factor is 2/3; and 10 represents that the fractional frequency reuse factor is 1/3.
Manner 2: the fractional frequency reuse factors of individual frequency partitions are determined according to the number of frequency partitions, for example, as shown in Fig. 3, the frequency partition number is 3, therefore the fractional frequency reuse factor of the frequency partitions is 1/3. At this time, it is possible not to transmit this information to reduce the overhead.
Manner 3: for the fractional frequency partition of all frequency partitions, the fractional frequency reuse factor is independently determined; and for the other frequency partitions of all frequency partitions, the same fractional frequency reuse factor is adopted. For example, as shown in Fig. 4, the frequency partition number is 4, and, the fractional frequency reuse factor of frequency partition 0 is 1 while the fractional frequency reuse factor of the other frequency partitions is 1/3.

### Number of Distributed Resource Units /Number of Contiguous Resource Units

The number of the distributed resource units or the number of the contiguous resource units can be represented by one of sub-band, mini-band and resource unit or the combination thereof, wherein the resource unit is a logic resource unit or a physical resource unit. Preferably, it is represented by the mini-band. Several representing manners are hereinafter given for example.

Manner 1: the number of the distributed resource unit in the frequency partition is represented by using multiple binary bits to indicate the number of the sub-bands and/or the number of the mini-bands and/or the number of the resource units for distributed resource units in the frequency partition, and the number of the contiguous resource unit in the frequency partition is determined by means of the size of frequency partition and the number of the distributed resource units in the frequency partition (performing subtraction operation).

Manner 2: the number of the contiguous resource unit in the frequency partition is represented by using multiple binary bits to indicate the number of the sub-bands and/or the number of the mini-bands and/or the number of the resource units for contiguous resource units in the frequency partition; and the number of the distributed resource units in frequency partition is determined by means of the size of frequency partition and the number of the contiguous resource units in frequency partition (performing subtraction operation). Herein, the multiple binary bits can include 3∼7 bits, or the bit number can be determined according to the bandwidth to reduce the overhead, for example, as shown in Table 1:

**Table 1**

| | | | | | |
|---|---|---|---|---|---|
| **Bandwidth (MHz)** | 5 | 7 | 8.75 | 10 | 20 |
| **Number of FFT Points** | 512 | 1024 | 1024 | 1024 | 2048 |
| **Bit Number Necessary for Representing Distributed Resource Unit number** | 3 | 4 | 4 | 4 | 5 |

alternatively, as shown in Table 2:

**Table 2**

| | | | | | |
|---|---|---|---|---|---|
| **Bandwidth (MHz)** | 5 | 7 | 8.75 | 10 | 20 |
| **Number of FFT Points** | 512 | 1024 | 1024 | 1024 | 2048 |
| **Bit Number Necessary for Representing Distributed Resource Unit number** | 5 | 6 | 6 | 6 | 7 |

The overhead can be further reduced in combination with the following Manners.

Manner 3: the configuration mode of using multiple binary bits to indicate the distributed resource unit and the contiguous resource unit. For example, 1 bit is used to indicates whether to map all sub-bands in the frequency partition to contiguous resource units and to map all mini-bands of the frequency partition to distributed resource units, wherein e.g. 1 represents yes while 0 represents no, wherein when the bit is 0, the further indication is given through the number of the distributed resource units as shown in Table 1 or Table 2. Certainly, it can be added to multiple bits for indicating more specific configurations.

Based on the above description, an embodiment of the present invention is further described hereinafter with reference to Fig. 4. For example, as shown in Fig. 4, N_{Sb} is the total number of sub-bands, N_{Mb} is the total number of mini-bands, L_{Fpi} is the number of the resource units in frequency partition i, L_{FPi,Sb} is the number of the sub-bands in frequency partition i, L_{FPi,Mb} is the number of the mini-bands in frequency partition i, N_{FPi,CRU} is the number of CRUs in frequency partition i, N_{FPi,DRU} is the number of DRUs in frequency partition i, wherein 0≤i≤3. These values can be indicated by use of binary bit values, and alternatively other manners are possible. It should be noted that there is redundancy in N_{Sb}, N_{Mb}, L_{FPi},, N_{FPi,Sb}, N_{FPi,Mb}, N_{FPi,CRU} and N_{FPi,DRU}, for example, when the unit of N_{FPi,CRU} and N_{FPi,DRU} is mini-band, L_{FPi}=N1* N_{FPi,Sb}+N₂* N_{FPi,Mb}= N₂* (N_{FPi,CRU} + N_{FPi,DRU}), so that it is possible to transmit only fractional information thereof and calculate the other information, therefore the overhead is reduced. The fractional resource mapping information can adopt default settings to further reduce the overhead. For example, in the case of 3 or 4 frequency partitions, the 3 frequency partitions can have the same size in default, and the later 3 frequency partitions of 4 frequency partitions have the same size in default.

The bit number necessary for representing fractional or all system information can be determined according to the system bandwidth. For example, the binary bit number necessary for representing the number of the frequency partitions, the bit number necessary for representing the number of the frequency partitions, the binary bit number necessary for representing the size of the frequency partition, the binary bit number necessary for representing the number of the sub-bands in the frequency partition can all be determined according to the bandwidth, as shown in Table 3:

**Table 3**

| | | | | | |
|---|---|---|---|---|---|
| **Bandwidth (MHz)** | 5 | 7 | 8.75 | 10 | 20 |
| **Number of FFT points** | 512 | 1024 | 1024 | 1024 | 2048 |
| **Maximal Number of Frequency Partition** | 4 | 4 | 4 | 4 | 7 |
| **Bit Number Necessary for Representing Number of Frequency Partitions** | 2 | 2 | 2 | 2 | 3 |
| **Bit Number Necessary for Representing Size of Frequency Partition** | 3 | 4 | 4 | 4 | 4 |
| **Bit Number Necessary for Representing Number of Sub-bands in Frequency Partition** | 3 | 4 | 4 | 4 | 5 |

By the above processing, a terminal can acquire the configuration or division condition of the resource performed by a base station. Besides the above resource mapping information, the system information further can include at least one or more of the following: uplink/downlink bandwidth information, multi-carrier information, compatibility system information, control channel information and multicast broadcast information etc., for example. The multi-carrier information, compatibility system information, control channel information and multicast broadcast information can be transmitted via secondary broadcast control channel. In addition, preferably, the main broadcast channel is further used for transmitting a super frame serial number, and the system information of the main broadcast channel should be verified by use of 8 or 16 bits CRC. The secondary broadcast channel is further used for transmitting a sector ID, and the system information of the secondary broadcast channel should be verified by use of 8 or 16 bits CRC. By notifying a terminal of the above information, the terminal can be made to subsequently parse the practical physical location corresponding to the logical resource.

### Uplink/Downlink Bandwidth Information

The uplink/downlink bandwidth information includes at least one of the following: the number or proportion of uplink sub-frame and downlink sub-frame in the manner of Time Division Duplex (TDD for short); whether individual carriers belong to the uplink carrier or the downlink carrier in the manner of Frequency Division Duplex (FDD for short), the bandwidth of downlink carrier and/or the bandwidth of uplink carrier in the manner of FDD, the proportion of downlink carrier bandwidth and uplink carrier bandwidth in the manner of FDD. In the manner of TDD, the uplink and the downlink occupy the resource of the same carrier by Time Division Multiplex (TDM for short). In the manner of FDD, the uplink and the downlink occupy the resource of multiple carriers by Frequency Division Multiplex (FDM for short).

For example, in the TDD manner, 2 bits are used for indicating the proportion of the sub-frames occupied by the downlink/uplink. For example, 00 represents 3:5, 01 represents 4:4, 10 represents 5:3, and 11 represents 6:2. Certainly, the bit number can be increased for representing more combinations.

For example, in the manner of FDD, the binary bitmap is used for representing whether each carrier is uplink carrier or downlink carrier. For example, if 3 carrier bandwidths are respectively 5MHz, 5MHz and 10MHz, 101 represents that the first 5MHz carrier and the 10MHz, carrier are both downlink carriers, while the second 5MHz carrier is an uplink carrier.

### Multi-Carrier Information

The multi-carrier information includes at least one or more of the following: the indication information of whether to support the multi-carrier operation, the duplex modes of each of fractional configuration carriers, the frequency points of each of fractional configuration carriers, the bandwidths of each of fractional configuration carriers, and the usage information of protection sub-carriers under the multi-carrier operation.

For example, 1 bit is used for representing the indication information of whether to support the multi-carrier operation, wherein 1 represents supporting while 0 represents non-supporting. 1-2 bits are used for representing the duplex mode of fractional configuring carriers, wherein 00 represents TDD, 01 represents FDD, 10 represents Half-Frequency Division Duplex (HFDD), and 11 represents that all the fractional configuration carriers adopt the same duplex mode or the duplex mode the same as those of the full configuration carrier corresponding thereto, or 11 is used as Reserved. The frequency points, and the bandwidths of fractional configuration carriers and the usage information of protection sub-carriers under the multi-carrier operation can be indicated by the manner of binary bit index or determined by the system bandwidth. For example, 000 represents 5MHz, 001 represents 10MHz, 010 represents 20MHz, 011 represents 7MHz, 100 represents 8.75MHz, 101 represents that a 10MHz bandwidth is divided into two 5MHz bandwidths, 110 represents that a 20MHz bandwidth is divided into two 5MHz bandwidths and one 10MHz bandwidth, 111 represents that a 20MHz bandwidth is divided into two 10MHz bandwidths or represents that a 10MHz or 20MHz bandwidth are not divided into multiple carriers.

The multi-carrier information indicates the configuration information of full configuration carriers and fractional configuration carriers, and the usage information of protection sub-carrier between carriers including the number of the protection sub-carriers used as the data sub-carriers. For example, the multi-carrier information can indicate other carriers' properties including the system bandwidth, frequency point, system configuration information similar to single carrier etc.. The usage condition of protection sub-carriers can be indicated by transmitting the resource unit number composed of the protection sub-carrier, or indicated by the system bandwidth, for example, when a 20MHz system is divided into two 10MHz systems, the middle protection sub-carrier is extracted to form two physical resource units, i.e. the protection sub-carrier at the right of the first 10MHz carrier forms one physical resource unit while the protection sub-carrier at the left of the second 10MHz carrier forms one physical resource unit. 1 bit is used for representing whether a carrier is full configuration carrier or fractional configuration carrier, for example, 1 representing the full configuration carrier and 0 representing the fractional configuration carrier.

### System Compatibility Information

The system compatibility information refers to the information transmitted to the previous generation system to support the previous generation system contiguously in the evolution system of the next generation system in the same series of standards, for example, the information which is sent since the IEEE 802.16m system needs to be compatible with the IEEE 802.16e system, wherein the IEEE 802.16 system is a compatible system.

The system compatibility information includes one or more of the following: the indication information of whether to support a compatible system, the resource location information of compatible system in the downlink, and the resource location information of compatible system in the uplink, wherein the resource location information of compatible system in the downlink includes at least one of the following: the number of sub-frames occupied by the compatible system and the locations of sub-frames occupied by the compatible system; the resource location information of compatible system in the uplink includes at least one of the following: the total number of sub-frames occupied by the compatible system, the number of sub-frames occupied by the compatible system under the TDM mode, the locations of sub-frames occupied by the compatible system under the TDM mode, the locations of sub-frames occupied by the compatible system under the FDM mode, and the proportion of the sub-frames or the number of the resource units occupied by the compatible system under the FDM mode.

For example, 1 bit can be used for representing whether to support a compatible system wherein 1 represents supporting, and 0 represents non-supporting. 1∼3 bits are used for representing the location and/or the number of sub-frames occupied by the compatible system in the downlink, wherein for example, 01 is used for representing the downlink frames 0 and 1 are occupied by the compatible system. 1∼3 bits are used for representing the number of sub-frames occupied by the compatible system in the uplink, wherein for example, 01 is used for representing the first and second sub-frames occupied by the compatible system in the uplink. 2 bits are used for indicating the mode of uplink compatible system, i.e. FDM or TDM. For example, 01 represents that it is TDM mode at sub-frame 0 while it is FDM mode at sub-frame 1. 3∼7 bits are used for representing the bandwidth or, the proportion, the offset or the number of the resource units occupied in the uplink FDM mode.

### Control Channel Information

The control channel information includes, but is not limited to: the number of streams of the secondary broadcast control channel when using Multiple Input Multiple Output (MIMO for short) mode for transmission, the code rate of secondary broadcast control channel, the location information of unicast service control channel including at least the sub-frame number n in the interval between two unicast service control channels, and the location of the resource occupied by the uplink control channel. The location information of resource occupied by the uplink control channel includes: Ranging channel location information, fast feedback channel location information, Hybrid Automatic Repeat Request (HARQ) feedback channel location information, bandwidth request channel location information and location information of Sounding channel. For example, 1 or 2 bits can be used for representing the number n of the sub-frames between two unicast service control channels, wherein more particularly, 0 represents 1 sub-frame therebetween while 1 represents 2 sub-frames therebetween. As shown in Fig. 1, if the unicast service control channel exists once per sub-frame, it is indicated by the value 0 of 1 bit. The resource location of uplink control channel can be indicated by one or the combination of the following: sub-frame label, frequency partition label, the number of logical resource units, logical resource unit label and logical resource unit area identifier. In addition, the code rate of secondary broadcast control channel is associated with the coding efficiency, the number of replication and the modulation mode of secondary broadcast control channel; and therefore when other factors such as the coding mode and coding efficiency are determined, in the condition that the code rate of broadcast channel is only affected by the times of repetition, the code rate of secondary broadcast control channel is indicated or replaced by the times of repetition.

### Multicast Broadcast Information

The multicast broadcast information includes: the multicast broadcast location information and/or cyclic prefix information used by the multicast broadcast wherein the location information can be indicated by one or the combination of the following: the number of the sub-frames, sub-frame label, frequency partition label, the number of the resource units, resource unit label and resource unit area identification; and the cyclic prefix information indicates the cyclic prefix length used in the multicast broadcast area through binary bit index. For example, the logical resource units 000∼111 of sub-frame 2 are defined as multicast broadcast area; and alternatively, the frequency partition 3 in sub-frame 3 is multicast broadcast area or the multicast broadcast area is indicated by resource area defined by the logical resource serial number and sub-frame serial number. The CP length used in the multicast broadcast area can be indicated by one of the following methods: it is indicated by 1 bit whether to use a long CP or a short CP, or it is indicated, by 2 bits, which CP length (for example 1/4, 1/8, 1/16 and the like), is used, or it is obtained by the terminal detection.

It should be noted that, in some cases, there is a certain redundancy in the above information, therefore only fractional information may be transmitted to reduce the overhead. For example, N=48 as shown in Fig. 4 may not be transmitted, which is indicated by the system bandwidth, and the sub-band total number 12 may also not be transmitted, which may also be obtained by the system bandwidth and the sub-band size.

### Resource Allocation Information

Regarding a terminal, to determine the physical location at which it receives and/or transmits resource, the resource allocation information are needed besides of the system information. Particularly, the resource allocation information includes the location indication information of radio resource, with the indication information including at least one of the following: sub-frame label, logical resource unit serial number, offset respective to the determined resource location and logical resource area identifier etc. For example, the starting location of resource allocation is a determined location, and the length relative to the starting location is an offset.

After the base station transmits the system information to the terminal via the broadcast control channel, the terminal can determine the broadcast control channel location according to the system bandwidth information and the multi-carrier information, decode the broadcast control channel and the channel bearing the resource allocation information, acquire, from the broadcast control channel, other system information including the resource mapping information, and acquire the resource allocation information from the channel bearing the resource allocation information. Afterwards, the logical resource indicated by the radio resource location indication information of the resource allocation information is mapped to the physical resource through an inverse resource mapping process (also called reverse mapping) according to the resource mapping information. For example, as show in Fig. 1, the terminal first decodes the main broadcast control channel of the broadcast control channel, then decodes the secondary broadcast control channel to acquire the resource mapping information, afterwards decodes the unicast service control channel, and then decodes the resource allocation information, so as to acquire the physical resource location for receiving/transmitting data.

In accordance with the above embodiments of the present invention, by configuring the resource mapping information, it is possible for a terminal to acquire the resource configuration, mapping and/or division condition performed by the base station, and to determine the location for the terminal receiving/transmitting resource in combination with the resource mapping information, thereby improving the efficiency of scheduling radio resource and reducing the system overhead.

Obviously, it should be understood by those skilled in the art that the above various modules or steps of the present invention may be implemented by use of a universal computing device; they may be centralized at a single computing device or distributed at the network composed of multiple computing devices; alternatively, they may be implemented by an executable program code of computing device, which may therefore be stored in a storage device and executed by a computing device, or which may be respectively formed as various integrated circuit modules, or multiple modules or steps of which may be formed as single integrated circuit module.
Therefore the present invention is not limited to any specific combination of hardware and software.

The foregoing is only preferred embodiments of the present invention and is not for limiting the protection scope thereof. For those skilled in the art, there may be various modifications and changes to the present invention. Any modification, equivalent replacement and improvement made under the principle of the present invention should be included in the protection scope thereof.

## Claims

1. A system information transmission method, **characterized by**, comprising:
configuring by a base station a system information including resource mapping information, wherein the resource mapping information represents the resource configuration and mapping condition; and
transmitting by the base station the resource mapping information through a broadcast control channel.

2. The method according to claim 1, **characterized in that** the system information further comprises at least one of the following: uplink/downlink bandwidth information, multi-carrier information, system compatibility information, control channel information and multicast broadcast information.

3. The method according to claim 1 or 2, **characterized in that** a bit number necessary for representing fractional or all system information is determined according to system bandwidth.

4. The method according to claim 2, **characterized in that** the uplink/downlink bandwidth information comprises at least one of the following: the number of uplink sub-frames and downlink sub-frames or the proportion of uplink sub-frames and downlink sub-frames in the mode of TDD; whether individual carriers belong to the uplink carrier or the downlink carrier in the mode of FDD; a bandwidth of downlink carrier and/or a bandwidth of uplink carrier in the mode of FDD; and the proportion of downlink carrier bandwidth to uplink carrier bandwidth in the mode of FDD.

5. The method according to claim 2, **characterized in that** the multi-carrier information comprises at least one of the following: indication information of whether to support a multi-carrier operation, duplex mode of , frequency point of each of fractional configuration carriers, bandwidth of each of fractional configuration carriers, and usage information of protection sub-carriers under the multi-carrier operation.

6. The method according to claim 2, **characterized in that** the system compatibility information comprises at least one of the following: indication information of whether to support a compatibility system, resource location information of a compatibility system in the downlink, and resource location information of a compatibility system in the uplink, wherein the resource location information of a compatibility system in the downlink comprise at least one of the following: the number of sub-frames occupied by a compatibility system and locations of sub-frames occupied by a compatibility system; the resource location information of a compatibility system in the uplink comprises at least one of the following: the total number of sub-frames occupied by a compatible system, the number of sub-frames occupied under the TDM mode, locations of sub-frames occupied under the TDM mode, locations of sub-frames occupied under the FDM mode and a resource unit number or a proportion of sub-frames occupied under the FDM mode.

7. The method according to claim 2, **characterized in that** the control channel information comprises at least one of the following: the number of streams of a secondary broadcast control channel when using MIMO for transmission, a code rate of a secondary broadcast control channel, the number n of sub-frames in the interval between unicast service control channels and the location information of resource occupied by the uplink control channel, wherein the location information of resource occupied by the uplink control channel comprising: Ranging channel location information, fast feedback channel location information, HARQ feedback channel location information, bandwidth request channel location information and Sounding channel location information.

8. The method according to claim 2, **characterized in that** the multicast broadcast information comprises multicast broadcast location information and/or cyclic prefix information used in the multicast broadcast, wherein the location information is indicated by one or the combination of the number of sub-frames, a sub-frame label, a frequency partition label, the number of resource units, a resource unit label and a resource unit area identifier; and the cyclic prefix information indicates a cyclic prefix length used in the multicast broadcast area through binary bit index.

9. The method according to any one of claims 2-7, **characterized in that** the method further comprises:
transmitting in the broadcast control channel by the base station at least one of the following: the uplink/downlink bandwidth information, the multi-carrier information, the system compatibility information, the control channel information and the multicast broadcast information.

10. The method according to claim 1, **characterized in that** the resource mapping information comprises one or the combination of the following: the total number of physical resource units, a sub-band size, a mini-band size, the number of frequency partitions, size of each frequency partition, fractional frequency reuse factors corresponding to each frequency partition, the number of sub-bands in each frequency partition, the number of mini-bands in each frequency partition, the number of distributed resource units in each frequency partition and the number of contiguous resource units in each frequency partition.

11. The method according to claim 10, **characterized in that** the sub-band is composed of multiple contiguous physical resource units; and the mini-band is composed of one or more contiguous physical resource units.

12. The method according to claim 10, **characterized in that** the physical resource units included in the sub-band and/or the mini-band are fixed, or determined according to the system bandwidth and/or the channel quality feedback.

13. The method according to claim 10, **characterized in that** the number of binary bits representing the frequency partition is fixed, or determined according to the system bandwidth.

14. The method according to claim 3 or 10, **characterized in that** the fractional frequency reuse factor corresponding to the frequency partition is represented by one of the following manners:
representing fractional frequency reuse factor corresponding to each frequency partitions by using 1∼3 bits respectively;
determining fractional frequency reuse factor corresponding to each frequency partition according to the number of frequency partitions; and
determining the fractional frequency reuse factors thereof independently for fractional frequency partitions of all frequency partitions; and adopting the same fractional frequency reuse factor for the remaining frequency partitions of all frequency partitions.

15. The method according to claim 10, **characterized in that** the number of sub-bands in each frequency partition and/or the number of mini-bands in each frequency partition are represented by binary bits.

16. The method according to claim 3 or 15, **characterized in that** the binary bits comprise 3∼9 bits; or, the bit number of the binary bits is determined according to the system bandwidth.

17. The method according to claim 10, **characterized in that** the size of the frequency partition is represented by one of the following manner:
the size of the frequency partition is represented by the number of resource units included in the frequency partition, wherein the resource unit is a logical resource unit or a physical resource unit;
the size of the frequency partition is represented by a frequency partition configuration identifier; and
the size of the frequency partition is represented by the number of sub-bands and/or mini-bands included in the frequency partition.

18. The method according to claim 10, **characterized in that** the number of distributed resource units in the frequency partition and/or the number of contiguous resource units in the frequency partition are represented by one of the combination of the following manners:
Manner 1: the number of distributed resource units in the frequency partition is represented by using multiple binary bits to indicate the number of sub-bands and/or mini-bands and/or resource units used for distributed resource units in frequency partitions; and the number of contiguous resource units in frequency partition is determined by the size of the frequency partition and the number of distributed resource units in the frequency partition;
Manner 2: the number of contiguous resource units in the frequency partition is represented by using multiple binary bits to indicate the number of sub-bands and/or mini-bands and/or resource units used for contiguous resource units in the frequency partition; and the number of distributed resource units in the frequency partition is determined by the size of the frequency partition and the number of contiguous resource units in the frequency partition; and
Manner 3: the configuration mode of the distributed resource unit and the contiguous resource unit in the frequency partition is indicated by multiple binary bits,
wherein the resource unit is a logical resource unit or a physical resource unit.

19. The method according to claim 3 or 18, **characterized in that** the multiple binary bits comprise 3∼8 bits; alternatively, the bit number of by the multiple binary bits is determined according to the system bandwidth.

20. The method according to claim 1 or 10, **characterized in that** the fractional or all resource mapping information adopts default settings.

21. The method according to claim 10, **characterized in that** the step of transmitting by the base station the resource mapping information through the broadcast control channel comprises:
transmitting, via the broadcast control channel, at least one of the following: the number of the frequency partitions, the size of the each frequency partition, the fractional frequency reuse factors of the each frequency partition, the number of sub-bands in the each frequency partition, the number of mini-bands in the each frequency partitions, the number of distributed resource units in the each frequency partition and the number of contiguous resource units in the each frequency partition.

## Patentansprüche

1. Ein System Informations Übertragungsverfahren, **dadurch gekennzeichnet**, umfassend:
Konfigurierung einer System Information einschließlich Ressourcen Mapping Information durch eine Basisstation, wobei die Ressourcen Mapping Information die Ressourcen Konfiguration und Mapping Bedingungen darstellt; und
Übertragung der Ressourcen Mapping Informationen durch die Basisstation über einen Rundfunk Kontrollkanal.

2. Das Verfahren gemäß Anspruch (1), **dadurch gekennzeichnet, dass** die System Information außerdem zumindest eins der Folgenden umfasst: Uplink/Downlink Bandbreiten Information, Multi-Carrier Information, System Kompatibilitäts Information, Kontrollkanal Information und Multicast Rundfunk Information.

3. Das Verfahren gemäß Anspruch (1) oder (2), **dadurch gekennzeichnet, dass** die Bitnummer, die notwendig ist zum Darstellen von Teil- oder Gesamtsystem Informationen, anhand der System Bandbreite bestimmt wird.

4. Das Verfahren gemäß Anspruch (2), **dadurch gekennzeichnet, dass** die Uplink/Downlink Bandbreiten Information zumindest eins der Folgenden umfasst: die Anzahl der Uplink Teilframes und Downlink Teilframes oder der Anteil von Uplink Teilframes und Downlink Teilframes im TDD Modus; ob einzelne Carrier zum Uplink Carrier oder zum Downlink Carrier im FDD Modus gehören; eine Bandbreite des Downlink Carriers und/oder eine Bandbreite des Uplink Carriers im FDD Modus; und der Anteil von Downlink Carrier Bandbreite zur Uplink Carrier Bandbreite im FDD Modus.

5. Das Verfahren gemäß Anspruch (2), **dadurch gekennzeichnet, dass** die Multi-Carrier Information zumindest eins der Folgenden umfasst: Hinweis Informationen ob ein Multi-Carrier Betrieb unterstützt werden soll, Duplex Modus von, Frequenzpunkt eines jeden Teil Konfigurations Carriers, Bandbreite eines jeden Teil Konfigurations Carriers, und Nutzungs Informationen von Schutz Teil-Carriern im Multi-Carrier Betrieb.

6. Das Verfahren gemäß Anspruch (2), **dadurch gekennzeichnet, dass** die System Kompatibilitäts Information zumindest eins der Folgenden umfasst: Hinweis Informationen ob ein Kompatibilitäts System unterstützt werden soll, Ressourcen Lage-Informationen eines Kompatibilitäts Systems im Downlink, und Ressourcen Lage-Informationen eines Kompatibilitäts Systems im Uplink, wobei die Ressourcen Lage-Informationen eines Kompatibilitäts Systems im Downlink zumindest eins der Folgenden umfasst: die Anzahl der Teilframes, die von einem Kompatibilitäts System besetzt werden, und die Lage der Teilframes, die von einem Kompatibilitäts System besetzt werden; die Ressourcen Lage-Informationen eines Kompatibilitäts Systems im Uplink umfasst zumindest eins der Folgenden: die Gesamtanzahl der Teilframes, die von einem Kompatibilitäts System besetzt werden, die Anzahl der im TDM Modus besetzten Teilframes, die Lage der im TDM Modus besetzten Teilframes, die Lage der im FDM Modus besetzten Teilframes und eine Ressourcen Einheitsnummer oder ein Anteil der Teilframes, die im FDM Modus besetzt werden.

7. Das Verfahren gemäß Anspruch (2), **dadurch gekennzeichnet, dass** die Kontrollkanal Information zumindest eins der Folgenden umfasst: die Anzahl der Streams eines sekundären Rundfunk Kontrollkanals wenn MIMO für die Übertragung genutzt wird, eine Coderate eines sekundären Rundfunk Kontrollkanals, die Anzahl n von Teilframes im Intervall zwischen Unicast Dienstleistungs Kontrollkanälen und die Lage-Information der Ressourcen, die vom Uplink Kontrollkanal besetzt sind, wobei die Lage-Information von Ressourcen, die vom Uplink Kontrollkanal besetzt sind umfassen: anordnende der Kanal Lage-Information, Fast-Feedback Kanal Lage-Information, HARQ Feedback Kanal Lage-Information, Bandbreiten Anforderungs Lage-Information und Sounding-Kanal Lage-Information.

8. Das Verfahren gemäß Anspruch (2), **dadurch gekennzeichnet, dass** die Multicast Rundfunk Information Multicast Rundfunk Lage-Informationen und/oder zyklische Präfix Informationen umfasst, die im Multicast Rundfunk genutzt werden, wobei die Lage-Information durch eine oder eine Kombination der Anzahl von Teilframes, eine Teilframe Kennzeichnung, eine Frequenz Partitions Kennzeichnung, die Anzahl der Ressourcen Einheiten, eine Ressourcen Einheits Kennzeichnung und eine Ressourcen Einheits Lagekennung angezeigt wird; und die zyklische Präfix Information zeigt eine zyklische Präfix Länge an, die im Multicast Rundfunkbereich durch einen binären Bit Index genutzt wird.

9. Das Verfahren gemäß Anspruch (2-7), **dadurch gekennzeichnet, dass** das Verfahren außerdem umfasst:
Übertragung im Rundfunk Kontrollkanal durch die Basisstation von zumindest eins von dem Folgenden: die Uplink/Downlink Bandbreiten Information, die Multi-Carrier Information, die System Kompatibilitäts Information, die Kontrollkanal Information und die Multicast Rundfunk Information.

10. Das Verfahren gemäß Anspruch (1), **dadurch gekennzeichnet, dass** die Ressourcen Mapping Information, eine oder die Kombination der Folgenden umfasst: die Gesamtanzahl der physikalischen Ressourcen Einheiten, eine Teil-Band Größe, eine Mini-Band Größe, die Anzahl der Frequenz Partitionen, die Größe einer jeden Frequenz Partition, Bruchfrequenz Wiederbenutzungs Faktoren entsprechend jeder Frequenz Partition, die Anzahl der Teil-Bänder in jeder Frequenz Partition, die Anzahl der Mini-Bänder in jeder Frequenz Partition, die Anzahl der verteilten Ressourcen Einheiten in jeder Frequenz Partition und die Anzahl der zusammenhängenden Ressourcen Einheiten in jeder Frequenz Partition.

11. Das Verfahren gemäß Anspruch (10), **dadurch gekennzeichnet, dass** das Teil-Band aus mehrfach zusammenhängenden physikalischen Ressourcen Einheiten zusammengesetzt ist; und das Mini-Band aus einer oder mehreren zusammenhängenden physikalischen Ressourcen Einheiten zusammengesetzt ist.

12. Das Verfahren gemäß Anspruch (10), **dadurch gekennzeichnet, dass** die physikalischen Ressourcen Einheiten, die im Teil-Band und/oder dem Mini-Band enthalten sind, festgelegt sind, oder entsprechend der System Bandbreite und/oder des Kanal Qualitäts Feedbacks bestimmt werden.

13. Das Verfahren gemäß Anspruch (10), **dadurch gekennzeichnet, dass** die Anzahl der binären Bits, die die Frequenz Partition darstellen, festgelegt sind, oder entsprechend der System Bandbreite bestimmt werden.

14. Das Verfahren gemäß Anspruch (3) oder (10), **dadurch gekennzeichnet, dass** der Bruchfrequenz Wiederbenutzungs Faktor entsprechend der Frequenz Partition durch eine der folgenden Methoden dargestellt ist:
Darstellung des Bruchfrequenz Wiederbenutzungs Faktors entsprechend jeder der Frequenz Partitionen durch die Nutzung von jeweils 1-3 Bits;
Bestimmung der Bruchfrequenz Faktoren entsprechend jeder Frequenz Partitionen entsprechend der Anzahl von Frequenz Partitionen; und
Bestimmung der Bruchfrequenz Wiederbenutzungs Faktoren unabhängig davon für Bruchfrequenz Frequenz Partitionen von allen Frequenz Partitionen; und Übernahme des gleichen Bruchfrequenz Wiederbenutzungs Faktors für die restlichen Frequenz Partitionen aus allen Frequenz Partitionen.

15. Das Verfahren gemäß Anspruch (10), **dadurch gekennzeichnet, dass** die Anzahl der Teil-Bänder in jeder Frequenz Partition und/oder die Anzahl der Mini-Bänder in jeder Frequenz Partition durch binäre Bits dargestellt sind.

16. Das Verfahren gemäß Anspruch (3) oder (15), **dadurch gekennzeichnet, dass** die binären Bits 3~9 Bits umfassen; oder dass die Bitnummer der binären Bits entsprechend der System Bandbreite bestimmt wird.

17. Das Verfahren gemäß Anspruch (10), **dadurch gekennzeichnet, dass** die Größe der Frequenz Partition durch eine der folgenden Methoden dargestellt ist:
die Größe der Frequenz Partition wird durch die Anzahl der Ressourcen Einheiten dargestellt, die in der Frequenz Partition enthalten sind, wobei die Ressourcen eine logische Ressourcen Einheit oder eine physikalische Ressourcen Einheit ist;
die Größe der Frequenz Partition wird durch eine Frequenz Partitions Konfigurations Kennzeichnung dargestellt; und
die Größe der Frequenz Partition wird durch die Anzahl der Teil-Bänder und/oder Mini-Bänder dargestellt, die in der Frequenz Partition enthalten sind.

18. Das Verfahren gemäß Anspruch (10), **dadurch gekennzeichnet, dass** die Anzahl der verteilten Ressourcen Einheiten in der Frequenz Partition und/oder die Anzahl der zusammenhängenden Ressourcen Einheiten in der Frequenz Partition durch eine Kombination der folgenden Methoden dargestellt sind:
Methode 1: die Anzahl der verteilten Ressourcen Einheiten in der Frequenz Partition wird durch die Nutzung mehrfacher binärer Bits dargestellt, um die Anzahl der Teil-Bänder und/oder Mini-Bänder, und/oder Ressourcen Einheiten für verteilte Ressourcen Einheiten in Frequenz Partitionen anzuzeigen; und die Anzahl der zusammenhängenden Ressourcen Einheiten in Frequenz Partitionen ist durch die Anzahl der Frequenz Partitionen und die Anzahl der verteilten Ressourcen Einheiten in der Frequenz Partition bestimmt.
Methode 2: die Anzahl der zusammenhängenden Ressourcen Einheiten in der Frequenz Partition wird durch die Nutzung mehrfacher binärer Bits dargestellt, um die Anzahl der Teil-Bänder und/oder Mini-Bänder und/oder Ressourcen Einheiten für zusammenhängende Ressourcen Einheiten in der Frequenz Partition anzuzeigen; und die Anzahl der verteilten Ressourcen Einheiten in der Frequenz Partition wird durch die Größe der Frequenz Partition und die Anzahl der zusammenhängenden Ressourcen Einheiten in der Frequenz Partition bestimmt; und
Methode 3: der Konfigurations Modus der verteilten Ressourcen Einheiten und der zusammenhängenden Ressourcen Einheiten in der Frequenz Partition wird durch mehrfache binäre Bits angezeigt,
wobei die Ressourcen Einheit eine logische Ressourcen Einheit oder eine physikalische Ressourcen Einheit ist.

19. Das Verfahren gemäß Anspruch (3) oder (18), **dadurch gekennzeichnet, dass** die mehrfachen binären Bits 3∼8 Bits umfassen; alternativ wird die Bitnummer der mehrfachen binären Bits entsprechend der System Bandbreite bestimmt.

20. Das Verfahren gemäß Anspruch (1) oder (10), **dadurch gekennzeichnet, dass** die Teil-oder Ganzressourcen Einheits Mapping Information Standard Einstellungen annimmt.

21. Das Verfahren gemäß Anspruch (10), **dadurch gekennzeichnet, dass** der Schritt des Übertragens der Ressourcen Mapping Information durch die Basisstation über die Rundfunk Kontrollkanäle umfasst:
Übertragung, über Rundfunk Kontrollkanäle, zumindest von einem der Folgenden: die Anzahl der Frequenz Partitionen, die Größe jeder Frequenz Partition, die Bruchfrequenz Wiederbenutzungs Faktoren jeder Frequenz Partition, die Anzahl der Teil-Bänder in jeder Frequenz Partition, die Anzahl der Mini-Bänder in jeder der Frequenz Partitionen, die Anzahl der verteilten Ressourcen Einheiten in jeder Frequenz Partition und die Anzahl der zusammenhängenden Ressourcen Einheiten in jeder Frequenz Partition.

## Revendications

1. Procédé de transmission d'information de système, **caractérisé en ce qu'**il comprend :
la configuration, par une station de base, d'une information de système incluant une information de cartographie de ressources, où l'information de cartographie de ressources représente la configuration des ressources et l'état de la cartographie ; et
la transmission, par la station de base, l'information de cartographie des ressources par un canal de commande de diffusion.

2. Procédé selon la revendication 1, **caractérisé en ce que** le système d'information comprend en outre au moins une information parmi les suivantes : une information de bande passante de liaison montante/de liaison descendante, une information sur des multi porteuses, une information de compatibilité de système, une information de canal de commande et une information de multidiffusion.

3. Procédé selon les revendications 1 ou 2, **caractérisé en ce qu'**un nombre de bits nécessaire pour la représentation d'une information fractionnée ou concernant tout le système est déterminée en fonction de la bande passante de système.

4. Procédé selon la revendication 2, **caractérisé en ce que** l'information de bande passante de liaison montante/liaison descendante comprend au moins un des paramètres suivants : le nombre de sous-trames de liaison montante et de sous-trames de liaison descendante ou la proportion de sous-trames de liaison montante et de sous-trames de liaison descendante dans le mode du TDD ; si des porteuses individuelles font partie de la porteuse de liaison montante ou de la porteuse de liaison descendante dans le mode du FDD ; une bande passante d'une porteuse de liaison descendante et/ou une bande passante d'une porteuse de liaison montante dans le mode du FDD ; et la proportion de la bande passante de la porteuse de liaison descendante par rapport à la bande passante de la porteuse de liaison montante dans le mode du FDD.

5. Procédé selon la revendication 2, **caractérisé en ce que** l'information concernant les multi porteuses comprend au moins l'une des informations suivantes : une information d'état s'il faut encourager un fonctionnement par multi porteuses, un mode de duplex, un point de fréquence de chacune des porteuses de configuration fractionnées, une bande passante de chacune des porteuses de configuration fractionnées, et l'information sur l'utilisation de sous-porteuses de protection dans le cadre du fonctionnement par multi porteuses.

6. Procédé selon la revendication 2, **caractérisé en ce que** l'information de compatibilité de système comprend au moins l'une des informations suivantes : une information d'état s'il faut encourager un système de compatibilité, une information de localisation de ressources d'un système de compatibilité dans la liaison descendante, et une information de localisation de ressources d'un système de compatibilité dans la liaison montante, où l'information de localisation de ressources d'un système de compatibilité dans la liaison descendante comprend au moins l'un des paramètres suivants : le nombre de sous-trames occupées par un système de compatibilité et les localisations des sous-trames occupées par un système de compatibilité ; l'information de localisation de ressources d'un système de compatibilité dans la liaison montante comprend au moins l'un des paramètres suivants : le nombre total de sous-trames occupées par un système compatible, le nombre de sous-trames occupées sous le mode TDM, les localisations des sous-trames occupées sous le mode TDM, les localisations des sous-trames occupées sous le mode FDM et un nombre d'unités de ressources ou une proportion de sous-trames occupées sous le mode FDM.

7. Procédé selon la revendication 2, **caractérisé en ce que** l'information de canal de commande comprend au moins un des paramètres suivants : le nombre de niveaux d'un canal de commande de diffusion secondaire lors de l'utilisation du MIMO pour la transmission, un taux de code d'un canal de commande de diffusion secondaire, le nombre n de sous-trames dans l'intervalle entre des canaux de commande de service mono diffusion et l'information de localisation de ressources occupée par le canal de commande de liaison montante, l'information de localisation de ressources occupée par le canal de commande de liaison montante comprenant : une information de localisation de canal de classement, une information de localisation de canal de rétroaction rapide, une information de localisation de canal de rétroaction HARQ, une information de localisation d'un canal de requête de bande passante et une information de localisation de canal de sondage.

8. Procédé selon la revendication 2, **caractérisé en ce que** l'information de transmission de multidiffusion comprend une information de localisation de transmission de multidiffusion et/ou une information de préfixe cyclique utilisée dans la transmission de multidiffusion, où l'information de localisation est indiquée par un élément, ou la combinaison, parmi le nombre de sous-trames, une étiquette de sous-trame, une étiquette de partition de fréquences, le nombre d'unités de ressources, une étiquette d'unité de ressources et un identifiant de domaine d'unité de ressources ; et l'information de préfixe cyclique indique une longueur de préfixe cyclique utilisée dans le domaine de la transmission de multidiffusion par un indice de bit binaire.

9. Procédé selon l'une quelconque des revendications 2 à 7, **caractérisé en ce que** le procédé comprend en outre :
une transmission, par la station de base, dans le canal de commande de diffusion, d'au moins une des informations suivantes : l'information de bande passante de liaison montante/de liaison descendante, l'information sur la multi porteuse, l'information de compatibilité de système, l'information de canal de commande et l'information de transmission de multidiffusion.

10. Procédé selon la revendication 1, **caractérisé en ce que** l'information de cartographie des ressources comprend un nombre, ou la combinaison, des nombres suivants : le nombre total d'unités de ressources physiques, une taille de sous-bande, une taille de mini-bande, le nombre de partitions de fréquence, la taille de chaque partition de fréquence, des facteurs de réutilisation de fréquence fractionnée correspondant à chaque partition de fréquence, le nombre de sous-bandes dans chaque partition de fréquence, le nombre de mini-bandes dans chaque partition de fréquence, le nombre d'unités de ressources distribuées dans chaque partition de fréquence et le nombre d'unités de ressources contiguës dans chaque partition de fréquence.

11. Procédé selon la revendication 10, **caractérisé en ce que** la sous-bande est composée de multiples unités de ressources physiques contiguës ; et la mini bande est composée d'une ou de plusieurs unités de ressources physiques contiguës.

12. Procédé selon la revendication 10, **caractérisé en ce que** les unités de ressources physiques incluses dans la sous-bande et/ou dans la mini-bande sont fixées ou déterminées en fonction de la bande passante de système et/ou de la rétroaction de qualité de canal.

13. Procédé selon la revendication 10, **caractérisé en ce que** le nombre de bits binaires représentant la partition de fréquence est fixé, ou déterminé en fonction de la bande passante de système.

14. Procédé selon les revendications 3 ou 10, **caractérisé en ce que** le facteur de réutilisation de fréquence fractionnée correspondant à la partition de fréquence est représenté par l'une des manières suivantes :
une représentation du facteur de réutilisation de fréquence fractionnée correspondant à chaque partition de fréquence en utilisant de 1 à 3 bits respectivement ;
une détermination du facteur de réutilisation de fréquence fractionnée correspondant à chaque partition de fréquence en fonction du nombre de partitions de fréquence ; et
une détermination des facteurs de réutilisation de fréquence fractionnée indépendamment pour des partitions de fréquence fractionnée ou de toutes les partitions de fréquence ; et une adoption du même facteur de réutilisation de fréquence fractionnée pour les partitions de fréquence restantes parmi toutes les partitions de fréquence.

15. Procédé selon la revendication 10, **caractérisé en ce que** le nombre de sous-bandes dans chaque partition de fréquence et/ou le nombre de mini bandes dans chaque partition de fréquence sont représentés par des bits binaires.

16. Procédé selon les revendications 3 ou 15, **caractérisé en ce que** les bits binaires comprennent de 3 à 9 bits ; ou le nombre de bits binaires est déterminé en fonction de la bande passante.

17. Procédé selon la revendication 10, **caractérisé en ce que** la taille de la partition de fréquence est représentée par une des manières suivantes :
la taille de la partition de fréquence est représentée par le nombre d'unités de ressources incluses dans la partition de fréquence, où l'unité de ressources est une unité de ressources logique ou une unité de ressources physique ;
la taille de la partition de fréquence est représentée par un identifiant de configuration de partition de fréquence ; et
la taille de la partition de fréquence est représentée par le nombre de sous-bandes et/ou de mini-bandes incluses dans la partition de fréquence.

18. Procédé selon la revendication 10, **caractérisé en ce que** le nombre d'unités de ressources distribuées dans la partition de fréquence et/ou le nombre d'unités de ressources contiguës dans la fréquence de partition sont représentés par une manière, ou la combinaison, des manières suivantes :
Manière 1 : le nombre d'unités de ressources distribuées dans la partition de fréquence est représenté en utilisant de multiples bits binaires pour indiquer le nombre de sous-bandes et/ou de mini-bandes et/ou d'unités de ressources utilisées pour des unités de ressources distribuées dans la partition de fréquence ; et le nombre d'unités de ressources contiguës dans une partition de fréquence est déterminé par la taille de la partition de fréquence et le nombre d'unités de ressources distribuées dans la partition de fréquence ;
Manière 2 : le nombre d'unités de ressources contiguës dans la partition de fréquence est représenté en utilisant de multiples bits binaires pour indiquer le nombre de sous-bandes et/ou de mini-bandes et/ou d'unités de ressources utilisées pour des unités de ressources contiguës dans la partition de fréquence ; et le nombre d'unités de ressources distribuées dans la partition de fréquence est déterminé par la taille de la partition de fréquence et le nombre d'unités de ressources contiguës dans la partition de fréquence ;
Manière 3 : le mode de configuration de l'unité de ressources distribuées et de l'unité de ressources contiguës dans la partition de fréquence est indiqué par de multiples bits binaires,
où l'unité de ressources est une unité de ressources logique ou une unité de ressources physique.

19. Procédé selon les revendications 3 ou 18, **caractérisé en ce que** les multiples bits binaires comprennent 3 à 8 bits ; alternativement, le nombre de bits des multiples bits binaires est déterminé en fonction de la bande passante de système.

20. Procédé selon les revendications 1 ou 10, **caractérisé en ce que** l'information de cartographie des ressources fractionnée ou totale adopte des réglages par défaut.

21. Procédé selon la revendication 10, **caractérisé en ce que** l'étape de transmission, par la station de base, de l'information de cartographie des ressources par le canal de commande de diffusion comprend :
la transmission, via le canal de commande de diffusion, d'au moins un des paramètres suivants : le nombre de partitions de fréquence, la taille de chaque partition de fréquence, les facteurs de réutilisation de fréquence fractionnée de chaque partition de fréquence, le nombre de sous-bandes dans chacune des partitions de fréquence, le nombre de mini bandes dans chaque partition de fréquence, le nombre d'unités de ressources distribuées dans chaque partition de fréquence et le nombre d'unités de ressources contiguës dans chaque partition de fréquence.
